# EUROPÄISCHE PATENTSCHRIFT

(11) **EP 2 542 870 B1**
(45) Veröffentlichungstag und Bekanntmachung des Hinweises auf die Patenterteilung: **04.07.2018**
(21) Anmeldenummer: 11707579.6
(22) Anmeldetag: 23.02.2011
(51) Int. Cl.: G01J 5/00, B61K 9/04

(54) **SCHWELLE ZUR AUFLAGE VON SCHIENEN**
SLEEPER FOR SUPPORTING RAILS
TRAVERSE POUR LA POSE DE RAILS

(30) Priorität: 01.03.2010 DE 102010009754
(43) Veröffentlichungstag der Anmeldung: 09.01.2013
(73) Patentinhaber: Schenck Process Europe GmbH, 64293 Darmstadt (DE)
(72) Erfinder: GROLL, Peter, 64297 Darmstadt (DE); MÜLLER, Ralph, 64291 Darmstadt (DE); STILLGER, Martin, 65611 Brechen (DE)
(86) Internationale Anmeldenummer: PCT/EP2011/000876
(87) Internationale Veröffentlichungsnummer: WO 2011/107231

(56) Entgegenhaltungen:
- DE-A1- 10 030 998
- DE-A1- 10 060 380
- DE-A1-102005 024 852
- DE-A1-102006 015 924
- DE-B- 1 176 697

## Beschreibung

Die Erfindung betrifft eine Schwelle zur Auflage von Schienen innerhalb eines Gleisabschnittes für Schienenfahrzeuge, wobei die Schwelle sich entlang der Längsachse der Schwelle erstreckende längliche Armierungselementen besitzt

Bekanntermaßen werden Gleisabschnitte, d.h. Fahrbahnabschnitte aus hintereinander liegenden Schwellen auf denen zwei parallele stählerne Schienen für Schienenfahrzeuge befestigt sind, zu Messstrecken angepasst, indem einige dieser herkömmlichen Schwellen durch spezielle Messschwellen ausgetauscht werden, und Messeinrichtungen, wie z.B. Kraft- oder Temperaturmesssensoren beherbergen, um mit einem eine solche Messeinrichtung umfassenden Messwert-Aufnehmersystem zur Ermittlung von physikalischen Größen bei der Überfahrt von schienengebundenen Fahrzeugen genutzt zu werden. Solche auszutauschenden, herkömmlichen Schwellen können je nach Alter, Gleiskonstruktion und vorgesehener Nutzung durch Schienenfahrzeuge unterschiedlich, und insbesondere, Holz-, Stahl und Betonschwellen sein.

Aus der DE 103 05 470 ist ferner z.B. bekannt, Messeinrichtungen von unterschiedlichen Messwert-Aufnehmersystemen, insbesondere solche zur Kraftmessung, Temperaturmessung und/oder zur Wegmessung an gemeinsamen Schwellen anzuordnen. Messeinrichtungen zur Kraftaufnahme sind demgemäß zwischen der Schiene und der Schwelle angeordnet, sodass hierdurch bedingt grundsätzlich auch Messeinrichtungen von unterschiedlichen Messwert-Aufnehmersystemen vorteilhaft auf herkömmlichen Schwellen oder auch an herkömmlichen Schienen innerhalb eines gemeinsamen Gleisabschnittes vorgesehen werden können.

In Bezug auf Betonschwellen zur Auflage von Eisenbahnschienen wird in der DE 100 30 998 eine solche Betonschwelle offenbart, die in Längsrichtung der Schwellen etwa gleichmäßig verteilte Armierungsstäbe aufweist, die unter Vorspannung in den Betonkörper eingegossen sind, wobei mindestens im Bereich jeder Schienenlagerung auf der Schwellenoberseite als Aufnahmeelement eine Anschlussplatte vorgesehen ist, die im Betonkörper durch an ihrer Unterseite angebrachte Armierungselemente fest verankert ist und über Befestigungselemente verfügt, wobei die Anschlussplatte so in einer Absenkung im Bereich der Schienenlagerung angebracht ist, dass die Oberfläche der Anschlussplatte unterhalb der Schwellenoberseite liegt und wobei die Befestigungselemente so ausgebildet sind, dass an ihnen unterschiedliche Messeinrichtungen unter den Schienen zur Messsignalerfassung anbringbar sind. Eine solche Anordnung ist zwar für Kraftaufnehmersysteme geeignet, da die hierzu verwendete Sensorik direkt im Kraftfluss Schiene -Schwelle liegt. In Bezug auf Temperaturaufnehmersysteme, die im Bereich der Fahrwerküberwachung, z.B. zur Heißläuferortung oder Festbremsortung eingesetzt wird, ist die genutzte IR-Sensorik (Infrarot-Sensorik) zum Teil extrem fehleranfällig, weil die Umfeldeinflüsse (Witterung, dynamische Belastung, Schmutz) extrem sind. Eine Anordnung z.B. auf der Schwellenoberseite ist daher nur bedingt geeignet.

Zur Anordnung von Einrichtungen von Temperaturaufnehmersystemen wird daher in der Regel auf eine spezielle Hohlschwellen als Messschwellen zurückgegriffen. Diese sind jedoch wesentlich vibrationsanfälliger und die gesamte IR-Sensorik muss infolge über Schwingungsdämpferelemente innerhalb der Hohlschwelle gehalten werden. Auch ist der Quer-Verschiebewiderstand solcher speziellen Mess- bzw. Hohlschwellen nur mäßig in Bezug auf herkömmliche Schwellen, insbesondere auch im Vergleich zu Betonschwellen. In Bezug auf solche speziellen Hohlschwellen als Messschwellen kann beispielsweise auf die DE 100 60 380 sowie auf die EP 1 772 342 verwiesen werden.

Ferner ist in der DE 42 17 681 eine Anordnung von Einrichtungen eines Temperaturaufnehmersystems innerhalb einer Hohlgleisschwelle beschrieben, die parallel zu den herkömmlichen Schwellen angeordnet ist. Die Anordnung ist jedoch so, dass im Wartungsfall bzw. bei Fehler oder Ausfall eines Temperaturaufnehmersystems die Hohlgleisschwelle jedoch komplett aus dem Gleis entnommen werden muss, um an die innerhalb der Holgleisschwelle angeordnete IR-Sensorik gelangen zu können.

Aufgabe der Erfindung ist es somit, eine Schwelle zur Auflage von Schienen innerhalb eines Gleisabschnittes für Schienenfahrzeuge bereitzustellen, die Messeinrichtungen für unterschiedliche Messwert-Aufnehmersysteme beherbergt, eine hohe Lagestabilität aufweist und vorzugsweise weiterhin homogene Steifigkeitsverhältnisse in Gleisabschnitten bewirkt, bevorzugt in der Herstellung einfach und somit kostengünstig ist und zweckmäßig einen wartungsfreundlichen Zugang auch zu von der Schwelle beherbergten Temperaturmesseinrichtungen bietet.

Die Lösung der Aufgabe ist auf überraschende Weise bereits durch eine Gleisschwelle mit den Merkmalen des Anspruchs 1 gegeben. Bevorzugte Ausführungsformen und Weiterbildungen sind Gegenstand der Unteransprüche.

Demgemäß schlägt die Erfindung eine Schwelle zur Auflage von Schienen innerhalb eines Gleisabschnittes für Schienenfahrzeuge vor, wobei die Schwelle sich entlang der Längsachse der Schwelle erstreckende längliche Armierungselementen besitzt und als Vollmaterialschwelle mit einem Hohlraum hergestellt ist, der sich zwischen diesen Armierungselementen und von wenigstens einer Schwellenaußenseite her in das Schwelleninnere erstreckt, und wobei die Schwelle wenigstens zwei unterschiedlichen Messwert-Aufnehmersysteme aufweist, wobei eines der Messwert-Aufnehmersysteme ein Temperaturmesswert-Aufnehmersystem mit einer Infrarot-Sensorik ist, welche in den Hohlraum eingeschoben ist. Wesentliche Vorteile sind somit darin zu sehen, dass die Schwelle gleichzeitig für unterschiedliche Messwert-Aufnehmersysteme nutzbar ist, aufgrund der Herstellung als Vollmaterialschwelle eine hohe Lagestabilität aufweist und bedingt durch die Armierungselemente grundsätzlich weiterhin homogene Steifigkeitsverhältnisse in Gleisabschnitten bewirkt. Ferner ist die Integration eines Hohlraums in einer ansonsten als Vollmaterialschwelle ausgebildeten Schwelle einfach und kostengünstig.

Ist die Schwelle gemäß der Erfindung als Betonschwelle hergestellt, in welcher während deren Herstellung die Armierungselemente unter Vorspannung eingegossen sind, ergibt sich, eingebaut in einen Gleisabschnitt ein hoher Quer-Verschiebewiderstand und eine dauerhafte Lagestabile Positionierung. Auch kann eine solche Schwelle z.B. zusätzlich in ein Betongleisbett eingegossen werden. Zweckmäßig erstreckt sich der Holraum entlang der Längsachse der Schwelle, insbesondere co-axial zur Schwelle mit sich im Wesentlichen gleichmäßig um den Hohlraum herum verteilten Armierungselementen, so dass die zweckmäßig ein wartungsfreundlicher Zugang auch zur von der Schwelle beherbergten IR-Sensorik, da insbesondere auf der Schwellenoberseite angeordnete Schienen keinen störenden Einfluss ausüben können.

Von Vorteil ist, wenn der Holraum topfartig ausgebildet ist, anstelle durchgängig zwischen zwei Schwellenaußenseiten, da folglich auch weniger Material zur Bildung des Hohlraums herausgearbeitet werden muss. Bei Ausrichtung des Hohlraums entlang der Längsachse der Schwelle können z.B. auch zwei sich in entgegen gesetzte Richtungen erstreckende Hohlräume vorgesehen sein, zwischen denen weiterhin Material stehen bleiben kann.

In zweckmäßiger Weise besitzt die Schwelle Fixierungsmittel zur codierten Lagefixierung der IR-Sensorik, so dass eine besonders einfache Montage mit vordefinierter Endstellung gewährleistet ist.

Für eine möglichst einfache Wartungshandhabung ist ferner bevorzugt vorgesehen, dass die Fixierungsmittel zum Herausnehmen der IR-Sensorik wiederholt lösbar sind, z.B. in Art von Rastmitteln oder als Mittel zum bewirken eines Bajonettverschlusses.

Für ein möglichst schonendes Montieren und Herausnehmen der Infrarot-Sensorik, ist diese bevorzugt zuvor innerhalb einer Ummantelungseinheit lagefest angeordnet, welche daraufhin in den Holraum eingeschoben ist. Eine besonders bevorzugte Ausführungsform sieht vor, dass an der Schwellenaußenseite, von der sich der Holraum erstreckt, um den Hohlraum herum eine Basisplatte mit ersten Fixierungsmitteln befestigt ist, die zumindest bei aus dem Hohlraum entfernter Ummantelungseinheit von der Schwellenaußenseite her zugänglich sind, und wobei die Ummantelungseinheit komplementär ausgebildete zweite Fixierungsmittel umfasst, wobei die ersten und zweiten Fixierungsmittel zur wiederholt lösbaren, codierten Lagefixierung zusammenwirken. Insbesondere bei Ausrichtung des Hohlraums im Wesentlichen entlang der Längsachse der Schwelle erstreckt sich insbesondere für eine Temperaturerfassung an Achsen, Lagern, Rädern, Bremsen und/oder Schwellen von Schienenfahrzeugen zweckmäßig quer zur Längsachse der Schwelle und bei innerhalb des Gleisabschnittes eingebauter Schwelle von deren Oberseite kommend wenigstens ein Kanal bis in den Hohlraum, sodass IR-Strahlen von den zu überwachenden Schienenfahrzeugteilen auf einfache Weise bis zur IR-Sensorik gelangen können.

Gegen Witterungseinflüsse ist zweckmäßig an der Schwellenoberseite, von der sich der Kanal erstreckt, eine den Kanal zur Außenseite hin abdeckende Schließeinrichtung befestigt, die mittels einer daran angeschalteten Schließelektronik geöffnet werden kann, um zur Messung IR-Strahlen durchlassen zu können.

Zur einfacheren Wartung ist die Schließeinrichtung bevorzugt derart befestigt, dass diese wiederholt entfernbar ist.

Eine besonders bevorzugte Ausführungsform sieht hierzu vor, dass an der Schwellenoberseite, von der sich der Kanal erstreckt, um den Kanal herum eine Basisplatte mit dritten Fixierungsmitteln befestigt ist, die zumindest bei entfernter Schließeinrichtung von der Schwellenoberseite her zugänglich sind, und wobei die Schließeinrichtung komplementär ausgebildete vierte Fixierungsmittel umfasst, wobei die dritten und vierten Fixierungsmittel zur wiederholt lösbaren, codierten Lagefixierung zusammenwirken.

In praktischer Ausführung ist in der Ummantelungseinheit ist zusammen mit der IR-Sensorik ein mit der IR-Sensorik zusammenwirkendes Spiegelsystem zur Umlenkung von durch den Kanal einfallenden IR-Strahlen angeordnet ist, mit welchem Spiegelsystem wiederum die Schließeinrichtung ausgerichtet ist.

Bevorzugt ist ferner vorgesehen, als ein zweites Messwert-Aufnehmersystem ein Kraftmesswert-Aufnehmersystem mit einer Kraftmesszelle vorzusehen, welche an einer Schwellenaußenseite und unterhalb der Schiene beherbergt ist.

Hierzu ist zweckmäßig an der Schwellenaußenseite zur Beherbergung der Kraftmesszelle eine Einsenkung herausgearbeitet, in welche diese eingesetzt ist, so dass die Schienenlage der auf den weiteren herkömmlichen Schwellen angeordneten Schiene entspricht.

Zur einfacheren Montage kann die Kraftmesszelle auf einer Basisplatte sitzen, welche fest mit der Schwelle verbunden ist. Darüber hinaus kann ferner zwischen Kraftmesszelle und Schiene eine Zwischenplatte Zwischenplatte angeordnet sein. Diese ermöglicht den Einsatz unterschiedlichster gestalteter Krafmesszellen, sowie unterschiedlichster Schienentypen und bietet zusätzlich einen Schutz von oben.

Ferner kann zwischen Zwischenplatte und Schiene eine Adapterplatte angeordnet sein oder die Zwischenplatte ist bereits als Adapterplatter aufgebildet, auf welcher die Schiene in einer vorgeschriebenen Neigung unverrückbar aufklemmbar ist.

In an und für sich bekannter Weise kann die Kraftmesszelle elektrische Anschlüsse zur Abnahme von elektrischen Signalen besitzen, die die von der Schiene in die Kraftmesszelle eingeleitete Kraft repräsentieren.

Eine besondere Ausführung sieht vor, dass die Kraftmesszelle zur Aufnahme von Vertikalkräften (Q) und Horizontalkräften (Y) aufgebaut ist.

Weitere Merkmale und Vorteile der Erfindung werden aus der nachfolgenden detaillierten Beschreibung anhand eines Ausführungsbeispieles unter Bezugnahme auf die beigefügten Zeichnungen ersichtlich.

In den Zeichnungen zeigen:
Figur 1 einen Ausschnitt einer teilweise geschnittenen Ansicht in Längschnitt durch eine als Betonschwelle hergestellte Schwelle gemäß der Erfindung, und
Figur 2 einen Schnitt entlang der Schnittlinie AB der Figur 1, gesehen von links gemäß Fig. 1.

Nachfolgend wird auf das in den Figuren dargestellte Ausführungsbeispiel einer Betonschwelle gemäß der Erfindung näher eingegangen.

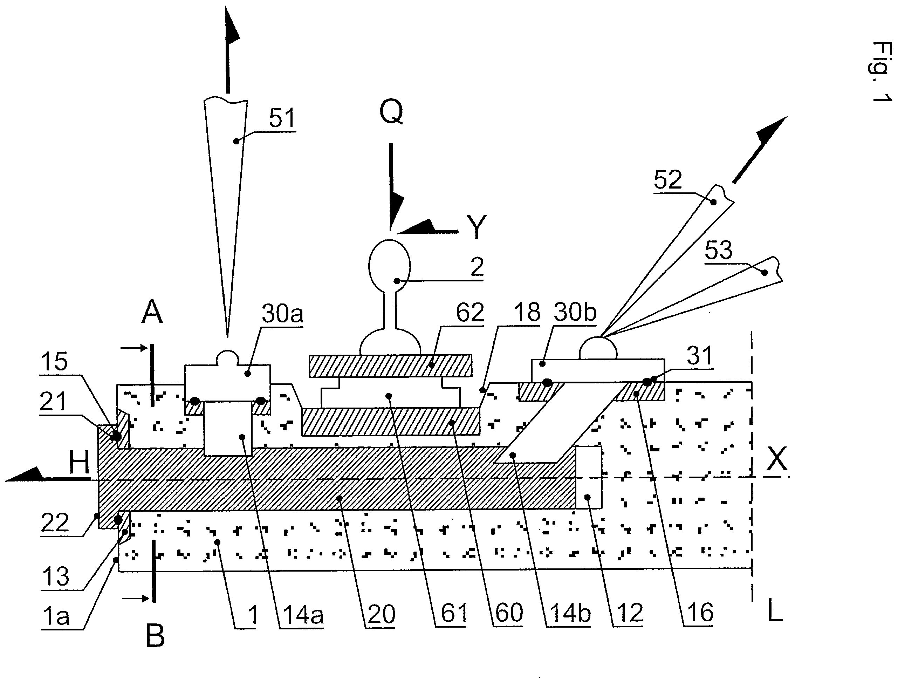

Figur 1 zeigt eine teilweise geschnittene Ansicht in Längschnitt durch eine Schwelle 1 zur Auflage von Schienen 2, die gemäß der Erfindung ausgebildet ist.

Die Schwelle 1 zur Auflage von Schienen für Schienenfahrzeuge ist als Vollmaterialschwelle hergestellt und besitzt sich entlang der Längsachse X der Schwelle erstreckende längliche Armierungselemente 11, wobei innerhalb der Betonschwelle ein sich zwischen diesen Armierungselementen 11 erstreckender Hohlraum 12 ausgebildet ist. Die Schwelle ist zur Nutzung mit wenigstens zwei unterschiedliche Messwert-Aufnehmersystemen ausgebildet, wobei eines dieser Messwert-Aufnehmersysteme ein Temperaturmessungs-Messwert-Aufnehmersystem mit wenigstens einer in den Figuren aus Gründen der

Übersichtlichkeit nicht näher dargestellten IR-Sensorik ist, die innerhalb des Hohlraums 12 aufgenommen ist. Die Schwelle 1 ist bevorzugt als Betonschwelle hergestellt und die Armierungselemente 11 sind in diese während deren Herstellung unter Vorspannung eingegossen.

Als zweites Messwert-Aufnehmersystem ist ein KraftMesswert-Aufnehmersystem mit einer Kraftmesszelle 61 gezeigt, wobei die Kraftmesszelle an einer Schwellenaußenseite und unterhalb der Schiene 2 beherbergt ist.

Die Infrarot-Sensorik kann zur Beherbergung in den Holraum eingeschoben werden, wie nachfolgend näher beschrieben.

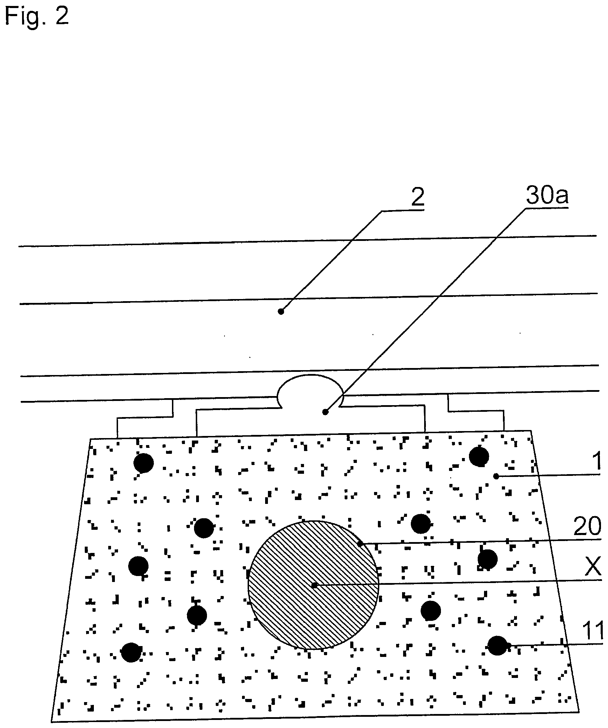

Im Einzelnen erstreckt sich der dargestellte Holraum 12 entlang der Längsachse X der Schwelle, gemäß Ausführungsbeispiel co-axial zur Schwelle. Die Armierungselemente können sich somit, wie insbesondere der Figur 2 zu entnehmen, im Wesentlichen gleichmäßig um den Holraum 12 herum verteilt erstrecken.

Wie der strichpunktierten Linie L in Figur 1 zu entnehmen ist, zeigt Figur 1 lediglich einen Teil einer Betonschwelle 1, die sich dementsprechend gemäß Figur 1 zur rechten Seite hin verlängert und eine zweite Schiene, die parallel zur ersten Schiene 2 verläuft, trägt.

Der Hohlraum 12 ist gemäß Ausführungsbeispiel topfartig ausgebildet, so dass zweckmäßig in dem nicht dargestellten, zur rechten Seite hin verlängerten Schwellenbereich ein weiterer sich in entgegengesetzter Richtung zum Hohlraum 12 erstreckender Hohlraum angeordnet ist. Nachfolgend wird jedoch aus Gründen der Übersichtlichkeit lediglich auf den dargestellten Ausschnitt Bezug genommen, da der zur rechten Seite hin verlängerte Schwellenbereich im Wesentlichen spiegelbildlich aufgebaut sein kann.

Die topfartige Aussparung 12 ist beim Herstellungsprozess der Betonschwelle 1 integriert, unterhalb der Schiene 2 angeordnet ist und erstreckt sich koaxial zur Längsachse X der Betonschwelle 1, wobei an einer Querseite 1a der Betonschwelle eine Öffnung vorgesehen ist, durch welche die IR-Sensorik in den Hohlraum eingeschoben werden kann und aus diesem auch wieder entfernt werden kann.

Zur codierten Lagefixierung der IR-Sensorik, also zur Montage mit vordefinierter Endstellung, weist die Schwelle Fixierungsmittel 15 auf, die darüber hinaus wiederholt lösbar sind, so dass die IR-Sensorik grundsätzlich jederzeit, insbesondere zu Wartungszwecken, wieder herausnehmbar ist. Fixierungsmittel, die sowohl eine codierte Lagefixierung gewähren als auch wiederholt lösbar sind, können z.B. als Rastmittel oder als Mittel zum Bewirken eines Bajonettverschlusses ausgebildet sein.

Zum weiteren Schutz der IR-Sensorik ist diese zweckmäßig zunächst in einer Ummantelungseinheit 20 Lagefest angeordnet, und diese Ummantelungseinheit 20 ist, wie in den Figuren dargestellt, dann in dem Hohlraum 12, der z.B. zylindrisch ausgebildet sein kann, eingesetzt, gemäß Figur 1 in Richtung des Pfeils "H". Gemäß Fig. 1 ist zur lage-und ortsfesten Fixierung vorgesehen, dass an der Schwellenaußenseite, von der sich der Holraum 12 erstreckt, um den Holraum 12 herum eine Basisplatte 13 mit ersten Fixierungsmitteln 15, z.B. in Art von Rastausnehmungen, befestigt ist. Die Fixierungsmittel 15 sind somit zumindest bei aus dem Holraum entfernter Ummantelungseinheit 20 und also bei entfernter IR-Sensorik von der Schwellenaußenseite her zugänglich. Die die Ummantelungseinheit 20 besitzt komplementär ausgebildete zweite Fixierungsmittel 21, z.B. in Art von Rastnasen, so dass die ersten und zweiten Fixierungsmittel 15 und 21 zur wiederholt lösbaren, codierten Lagefixierung zusammenwirken.

Es ist für einen Fachmann ersichtlich, dass auch für die Anordnung der IR-Sensorik innerhalb der Ummantelungseinheit 20 zweckmäßig derartige oder ähnliche Fixierungsmittel vorgesehen sind.

In jedem Fall bewirken die Fixierungsmittel 21 und 15 somit eine lage- und ortsfeste vorgegebene Positionierung der Ummantelungseinheit 20 innerhalb des Hohlraums 12, sodass ein optimales Zusammenwirken der IR-Sensorik mit weiteren, auch außerhalb der Ummantelungseinheit 20 angeordneten Komponenten eines Temperaturmessungs-Messwert-Aufnehmersystem, wie nachfolgend beschrieben gewährleistet ist.

Üblicherweise umfasst ein solches Temperaturmessungs-Messwert-Aufnehmersystem wenigstens ein Infrarotmesskopf, durch welchen die Temperatur eines Körpers berührungslos über größere Distanzen erfassbar ist und der innerhalb der Ummantelungseinheit 20 angeordnet ist. Ein solcher Infrarotmesskopf, wie an für sich für einen Fachmann bekannt, kann eine Anzahl von Sensoren aufweisen, durch welche ein flächiger Messbereich des Infrarotmesskopfes bestimmt ist. Jeder Sensor misst hierbei die Infrarotstrahlung bestimmter Wellenlängen in einem eigenen Sektor, beispielsweise in dem Sektor 51, dem Sektor 52 oder 53. Der Sektor 51 ist gemäß Figur 1 beispielsweise so ausgebildet, dass bei einem vorbeifahrenden Schienenfahrzeug auf die Lager oder Achsen der auf der Schiene 2 fahrenden Räder gerichtet ist und die Sektoren 52 und 53 sind so ausgerichtet, dass sie z.B. auf die Bremsen oder auf die Räder der auf der zur Schiene 2 parallelen Schiene rollenden Räder eines vorbeifahrenden Zuges gerichtet sind.

Wie bei der Figur 1 dargestellt sind mehrere Sektoren vorgesehen, um also mehrere Messstellen an einem Zug zu erfassen. In diesem Fall kann innerhalb der Ummantelungseinheit 20 eine IR-Sensorik mit mehreren Infrarotköpfen vorgesehen sein oder auch mehrere IR-Sensorikeinheiten mit jeweils einem Infrarotkopf, wobei die Messköpfe im Wesentlichen identisch aufgebaut und auch mit denselben Peripheriegeräten zusammenarbeiten können. Jedem Messkopf dieser einer IR-Sensorik ist im dargestellten Beispiel ein nicht gezeigter Spiegel zugeordnet, der gleichermaßen in der Ummantelungseinheit 20 angeordnet ist, und durch den die in einem Sektor einfallenden Infrarotstrahlen zum Infrarotmesskopf umgelenkt werden. Jeder Spiegel ist bevorzugt mit einem Motor (nicht gezeigt) versehen, der ebenfalls innerhalb der Infrarotsensoreinheit 20 angeordnet ist, um den Spiegel in der Spiegelebene zu drehen, so dass auf der Oberfläche des Spiegels liegender Schmutz weggeschleudert werden kann und, um durch Ausmittelung von Ausrichtungsfehlern des Spiegels zu einer im zeitlichen Mittel genauer festgelegten Reflektionsrichtung zu führen, da durch die Drehung eines solchen Spiegels Unebenheiten der Spiegelfläche ausgemittelt werden können. Innerhalb der Ummantelungseinheit 20 ist bevorzugt auch eine Datenvorverarbeitungseinrichtung angeordnet, die über Messdatenleitungen mit den Messköpfen verbunden ist und über die letztlich die empfangenen Strahlen zu Daten zur Wärmeermittlung verarbeitet werden. Um die verarbeiteten Daten nach außen zu führen, können Leitungen aus der Ummantelungseinheit 20 nach außen geführt werden, oder die Übermittlung der verarbeiteten Daten kann auch mittels Funkwellen erfolgen. Je nach Ausführungsform sind entsprechende Mittel innerhalb der Ummantelungseinheit 20 angeordnet und verbunden.

Es sei darauf hingewiesen, dass grundsätzlich die Messköpfe auch direkt auf zu vermessende Fahrwerksabschnitte vorbeifahrender Schienenfahrzeuge ausgerichtet sein können, sodass Spiegel zur Umlenkung entfallen können.

Für den Einfall der IR-Strahlen sind Kanäle 14a, 14b in die Betonschwelle 1 bei deren Herstellung eingelassen, die bis in den Hohlraum 12 reichen. Wie bei Fig. 1 zu sehen, sind erstrecken sich diese Kanäle 14a, 14b quer zur Längsachse der Schwelle 1 und bei innerhalb des Gleisabschnittes eingebauter Schwelle von deren Oberseite kommend bis in den Holraum 12.

Jeder Kanal 14a oder 14b ist bevorzugt durch eine an der Schwellenoberseite befestigte Schließeinrichtung 30a bzw. 30b nach außen hin abgeschlossen, wobei die Schließeinrichtung 30a oder 30b mittels einer daran angeschalteten, jedoch nicht gezeigten Schließelektronik, z.B. einem Motor oder einem Elektromagneten, verschlossen und geöffnet werden kann. Bei verschlossener Schließeinrichtung kann somit kein Schmutz in das Innere der Betonschwelle eintreten und insbesondere kann auch der bei korrekter Fixierung der Ummantelungseinheit 20 innerhalb des Hohlraums 12, wie oben beschrieben, ein mit der IR-Sensorik zusammenwirkendes und mit der die Schließeinrichtung ausgerichtetes Spiegelsystem nicht verschmutzt werden. Durch das mittels der Schließelektronik bewirkte Öffnen und Schließen der Schließeinrichtungen können die Kanäle zwischen einzelnen Messphasen abgedeckt bzw. verschlossen werden. Bevorzugt ist für jede Schließeinrichtung eine Steuerleitung vorgesehen, die zu der z.B. innerhalb der Ummantelungseinheit 20 angeordneten Datenvorverarbeitungseinrichtung führt, sodass über diese auch die Steuerung der Schließeinrichtungen übernommen wird, wozu neben dem Öffnen und Schließen der Schließeinrichtung auch die Messung der Temperatur in der Umgebung der Schließeinrichtung, das Beheizen der Schließeinrichtung bei Umgebungstemperatur unterhalb eines vorgegebenen Schwellenwertes und/oder die Erfassung der Lagen der Schließeinrichtungen durch Positionsfühler wie beispielsweise Endlagenschalter gehören kann. Auch können ferner Heizelemente (nicht gezeigt) vorgesehen sein, über die im Winter eine Beheizung der Schließeinrichtungen möglich ist, sodass ein Einfrieren der Mechanik verhindert ist.

Auch die Schließeinrichtungen 30a, 30b sind aus Wartungsgründen zweckmäßig derart befestigt, dass diese wiederholt entfernbar sind. Für jede der Schließeinrichtungen ist bevorzugt ein den Fixierungsmitteln 15 und 21 ähnlicher Fixierungsmechanismus 31 und 16 vorgesehen, sodass die Schließeinrichtungen auf einfachste Weise in im Wesentlichen vertikaler Richtung von der Betonschwelle 1 entfernt werden können. Gemäß Figur 1 umfasst der dort beispielhaft dargestellte Fixierungsmechanismus eine um einen jeweiligen Kanal 14a, 14b herum angeordnete Basisplatte 16 mit Ausnehmungen, in welche in vertikaler Richtung an der Schließeinrichtung 30a oder 30b angeordnete Rastnasen 31 lage- und positionsgetreu einrasten können. Das Fixierungsmittel 16 ist somit zumindest bei entfernter Schließeinrichtung 30a, 30b von der Schwellenoberseite her zugänglich. Die mit Fixierungsmittel 16 gezeigte Basisplatte 16 mit Ausnehmungen kann ferner in die Betonschwelle 1 in eine zuvor herausgearbeitete Aussparung eingelassen sein, sodass jeglicher über die Abmessungen der Betonschwelle 1 hinausragende Überstand zweckmäßigerweise auf ein Minimum reduziert ist, und die in die Betonschwelle integrierten Komponenten des Temperaturmesswert-Aufnehmersysteme somit weitgehend unanfällig gegen jegliche Umgebungseinflüsse sind.

Zur Beherbergung der Kraftmesszelle 61 des zweiten, in Figur 1 dargestellten Messwert-Aufnehmersystems ist unterhalb der Schiene 2 eine Einsenkung 18 in der Betonschwelle 1 bei deren Herstellung herausgearbeitet, in welche die Kraftmesszelle 61 eingesetzt ist. Im vorliegenden Fall ist zunächst eine Basisplatte 60 in die Aussparung 18 eingelassen und fest mit der Betonschwelle 1 verbunden, beispielsweise mittels Armierungselemente wie in der DE 100 30 998 beschrieben. Auf der Basisplatte sitzt dann die Kraftmesszelle 61 und zwischen der Schiene 2 und der Kraftmesszelle 61 kann ferner eine Zwischenplatte 62 angeordnet sein, auf der wiederum die Schiene 2 aufliegt. Auch kann, wie beispielsweise in der DE 10 2006 015 924 beschrieben, zwischen der Zwischenplatte und der Schiene 2 noch eine Adapterplatte angeordnet sein oder die Zwischenplatte selbst kann als Adapterplatter aufgebildet ist, sodass die Schien 2 in einer vorgeschriebenen Neigung auf der Adapterplatte unverrückbar befestigt ist, z.B. aufgeklemmt ist.

Die Kraftmesszelle 61 besitzt elektrische Anschlüsse (nicht dargestellt) an welchen in nicht dargestellter Weise elektrische Signale abgenommen werden können, die die von der Schiene in die Kraftmesszelle eingeleitete Kraft repräsentieren. Die Kraftmesszelle selbst ist in bevorzugter Weise zur Aufnahme von Vertikalkräften "Q" und Horizontalkräften "Y" geeignet aufgebaut. Ein solcher Aufbau kann beispielsweise entsprechend den in den DE 10 2008 018 076 beschriebenen Weisen erfolgen.

Die anhand des Ausführungsbeispiels beschriebene, in einer Vollmaterialschwelle 1 integrierte Messtechnik von wenigstens zwei unterschiedlichen Messwert-Aufnehmersystemen, vorliegend wenigstens einem Kraftmesswert-Aufnehmersystem und wenigstens einem Temperaturmesswert-Aufnehmersystem, zeichnet sich somit durch eine im Vergleich zu Stahlschwellen mit integrierter Messtechnik wesentlich bessere Güte insbesondere in Bezug auf Lagestabilität, Steifigkeit, Verschiebewiderstandfähigkeit aus. Ferner ist die Integration herstellungsbedingt günstiger als in Verbindung mit Stahlschwellen. Die trotz Integration der Messtechnik sehr homogenen Steifigkeitsverhältnissen der Betonschwelle in einem Gleisabschnitt zeichnen eine solche Betonschwelle mit einer sehr guten Eignung einer solchen Betonschwelle als Träger für produzierbare Messtechnik aus. Darüber hinaus kann bei der Integration der Messtechnik immer auf die konstruktiven Bedingungen der armierten Betonschwelle selbst Rücksicht genommen werden. Schließlich ist auch der schnelle Zugriff insbesondere auf die Schließeinrichtungen von Temperaturmesswert-Aufnehmersystemen, wie z.B. von Heißläufer-, Heißbrems- oder Heißlager-Ortungssystemen gewährleistet. Auch die Wartung der IR-Sensorik solcher Wärmeaufnehmersysteme inklusive systembedingter Spiegel ist aufgrund der Integration innerhalb des Holraums innerhalb der Betonschwelle erfindungsgemäß auf einfache Weise gewährleistet. Die Schließeinrichtungen können zweckmäßig auf einfache Weise vertikal und die IR-Sensorik auf einfache Weise im Wesentlichen horizontal aus der Vollmaterialschwelle gelöst und entfernt werden. Da die IR-Sensorik innerhalb der Schwellen-Armierungselemente liegt, können diese weiterhin in herkömmlicher Weise innerhalb der Schwelle angeordnet sein, sodass die Stabilität und Steifigkeit einer solchen erfindungsgemäß ausgebildeten Vollmaterialschwelle weiterhin den Qualitätsanforderungen genügt.

### Bezugszeichenliste:

- 1: Betonschwelle,
- la: Querseite der Betonschwelle
- 2: Eisenbahnschiene,
- 11: Armierungselemente,
- 12: Hohlraum, insbesondere topfartiger Hohlraum,
- 13: Basisplatte an Querseite um Hohlraum,
- 14a, 14b: Strahlengangkanal,
- 15: erste Fixierungsmittel (Rastaussparung),
- 16: Basisplatte um Strahlengangkanal,
- 18: Einsenkung,
- 20: Ummantelungseinheit,
- 21: zweite Fixierungseinheit (Rastnase)
- 22: Flanschartige Anlagefläche
- 30a, 30b: Schließeinrichtungen
- 51, 52, 53: Erfassungssektoren
- 31: vierte Fixierungsmittel (Rastnase)
- 60: Basisplatte für Kraftmesszelle
- 61: Kraftmesszelle
- 62: Zwischenplatte für Kraftmesszelle
- H: Entfernungsrichtung
- L: strichpunktierte Linie
- Q, Y: Kräfte
- X: Längsachse der Betonschwelle

## Patentansprüche

1. Schwelle zur Auflage von Schienen innerhalb eines Gleisabschnittes für Schienenfahrzeuge,
- wobei die Schwelle (1) sich entlang der Längsachse (X) der Schwelle erstreckende längliche Armierungselementen (11) besitzt und
- als Vollmaterialschwelle mit einem Hohlraum (12) hergestellt ist,
-- der sich zwischen diesen Armierungselementen (11)
-- und von wenigstens einer Schwellenaußenseite her in das Schwelleninnere erstreckt,
- und wobei die Schwelle (1) wenigstens zwei unterschiedlichen Messwert-Aufnehmersysteme aufweist,
-- wobei eines der Messwert-Aufnehmersysteme ein Temperaturmesswert-Aufnehmersystem mit einer Infrarot-Sensorik ist, welche in den Hohlraum (12) eingeschoben ist.

2. Schwelle nach Anspruch 1, welche als Betonschwelle hergestellt ist und in welcher während deren Herstellung die Armierungselemente (11) unter Vorspannung eingegossen sind.

3. Schwelle nach einem der vorhergehenden Ansprüche, wobei der Hohlraum (12) sich entlang der Längsachse (X) der Schwelle, insbesondere koaxial zur Schwelle mit sich im Wesentlichen gleichmäßig um den Hohlraum (12) herum verteilten Armierungselementen (11) erstreckt.

4. Schwelle nach einem der vorangehenden Ansprüche, wobei der Hohlraum topfartig ausgebildet ist.

5. Schwelle nach einem der vorhergehenden Ansprüche, wobei die Schwelle mit Fixierungsmitteln (15, 21) zur codierten Lagefixierung der IR-Sensorik ausgebildet ist.

6. Schwelle nach Anspruch 5, wobei die Fixierungsmittel (15, 21) zum Herausnehmen der IR-Sensorik wiederholt lösbar sind.

7. Schwelle nach einem der vorhergehenden Ansprüche, wobei die Infrarot-Sensorik innerhalb einer Ummantelungseinheit (20) Lagefest angeordnet ist, die in den Hohlraum (12) eingeschoben ist.

8. Schwelle nach vorhergehendem Anspruch, wobei an der Schwellenaußenseite, von der sich der Hohlraum (12) erstreckt, um den Hohlraum (12) herum eine Basisplatte (13) mit ersten Fixierungsmitteln (15) befestigt ist, die zumindest bei aus dem Hohlraum entfernter Ummantelungseinheit von der Schwellenaußenseite her zugänglich sind, und wobei die Ummantelungseinheit (20) komplementär ausgebildete zweite Fixierungsmittel (21) umfasst, wobei die ersten und zweiten Fixierungsmittel zur wiederholt lösbaren, codierten Lagefixierung zusammenwirken.

9. Schwelle nach einem der vorangehenden Ansprüche, wobei quer zur Längsachse der Schwelle und bei innerhalb des Gleisabschnittes eingebauter Schwelle von deren Oberseite kommend sich wenigstens ein Kanal (14a, 14b) bis in den Hohlraum erstreckt.

10. Schwelle nach Anspruch 9, wobei an der Schwellenoberseite, von der sich der Kanal (14a, 14b) erstreckt, eine den Kanal zur Außenseite hin abdeckende Schließeinrichtung (30a, 30b) befestigt ist, die mittels einer daran angeschalteten Schließelektronik geöffnet werden kann.

11. Schwelle nach einem der Ansprüche 9 oder 10, wobei an der Schwellenoberseite, von der sich der Kanal (14a, 14b) erstreckt, um den Kanal (14a, 14b) herum eine Basisplatte (16) mit dritten Fixierungsmitteln befestigt ist, die zumindest bei entfernter Schließeinrichtung (30a, 30b) von der Schwellenoberseite her zugänglich sind, und wobei die Schließeinrichtung (30a, 30b) komplementär ausgebildete vierte Fixierungsmittel (31) umfasst, wobei die dritten und vierten Fixierungsmittel zur wiederholt lösbaren, codierten Lagefixierung zusammenwirken,

12. Schwelle nach einem der beiden vorgehenden Ansprüche, wobei in der Ummantelungseinheit ein mit der IR-Sensorik zusammenwirkendes Spiegelsystem zur Umlenkung von durch den Kanal (14a, 14b) einfallenden IR-Strahlen angeordnet ist, mit welchem die Schließeinrichtung (30a, 30b) ausgerichtet ist.

13. Schwelle nach einem der vorgehenden Ansprüche, wobei ein zweites Messwert-Aufnehmersystem ein KraftMesswert-Aufnehmersystem mit einer Kraftmesszelle (61) ist, welche an einer Schwellenaußenseite und unterhalb der Schiene (2) beherbergt ist.

14. Schwelle nach Anspruch 13, wobei die Kraftmesszelle (61) elektrische Anschlüsse zur Abnahme von elektrischen Signalen besitzt, die die von der Schiene in die Kraftmessdose eingeleitete Kraft repräsentieren.

15. Schwelle nach Anspruch 13 oder 14, wobei die Kraftmesszelle (61) zur Aufnahme von Vertikalkräften (Q) und Horizontalkräften (Y) aufgebaut ist.

## Claims

1. A tie for supporting rails within a section of track for rail vehicles,
- wherein the tie (1) has elongated reinforcing elements (11) extending along the longitudinal axis (X) of the tie and
- is manufactured as a solid material tie having a cavity (12),
-- which extends between these reinforcing elements (11)
-- and from at least one outside of the tie into the interior of the tie,
- and wherein the tie (1) includes at least two different transducer systems,
-- wherein one of the transducer systems is a temperature transducer system having an infrared sensor which is inserted into the cavity (12).

2. The tie according to Claim 1, which is manufactured as a concrete tie and into which the reinforcing elements (11) are cast under pretension during the manufacture thereof.

3. The tie according to one of the preceding claims, wherein the cavity (12) extends along the longitudinal axis (X) of the tie, in particular coaxially to the tie, including reinforcing elements (11), which are distributed essentially uniformly around the cavity (12).

4. The tie according to one of the preceding claims, wherein the cavity is provided with a cup-shaped design.

5. The tie according to one of the preceding claims, wherein the tie is designed with fixing means (15, 21) for coded position fixing of the IR sensor.

6. The tie according to Claim 5, wherein the fixing means (15, 21) are repeatedly detachable for the purpose of removing the IR sensor.

7. The tie according to one of the preceding claims, wherein the infrared sensor is disposed in a fixed position within a sheathing unit (20), which is inserted into the cavity (12).

8. The tie according to the preceding claim, wherein a base plate (13) is fastened around the cavity (12) on the outside of the tie, from which the cavity extends (12), with the aid of first fixing means (15) accessible from the outside of the tie at least when the sheathing unit has been removed from the cavity, and wherein the sheathing unit (20) includes second fixing means (21) of a complementary design, wherein the first and second fixing means interact to form the repeatedly detachable, coded position fixing system.

9. The tie according to one of the preceding claims, wherein at least one channel (14a, 14b), which is situated transversely to the longitudinal axis of the tie and comes from the upper side of the tie when the tie is built into the section of track, extends into the cavity.

10. The tie according to Claim 9, wherein a closing device (30a, 30b), which covers the channel to the outside and which may be opened by means of a closing electronic unit connected thereto, is fastened to the upper side of the tie, from which the channel (14a, 14b) extends.

11. The tie according to one of Claims 9 or 10, wherein a base plate (16), which has third fixing means accessible from the upper side of the tie at least when the closing unit (30a, 30b) is removed, is fastened around the channel on the upper side of the tie, from which the channel (14a, 14b) extends, and wherein the closing device (30a, 30b) includes fourth fixing means (31) of a complementary design, wherein the third and fourth fixing means interact to form the repeatedly detachable, coded position fixing system.

12. The tie according to one of the two preceding claims, wherein a mirror system, which interacts with the IR sensor for the purpose of deflecting the incident IR beams passing through the channel (14a, 14b), is disposed in the sheathing unit and is used to orient the closing device (30a, 30b).

13. The tie according to one of the preceding claims, wherein a second transducer system is a force transducer system having a load cell (61), which is accommodated on an outside of the tie and beneath the rail (2).

14. The tie according to Claim 13, wherein the load cell (61) has electric connections for tapping electric signals, which represent the force introduced into the load cell from the rail.

15. The tie according to Claim 13 or 14, wherein the load cell (61) is designed to absorb vertical forces (Q) and horizontal forces (Y).

## Revendications

1. Traverse pour la pose de rails sur un tronçon de voie pour véhicules ferroviaires,
- la traverse (1) comprenant des éléments d'armature (11) s'étendant le long de l'axe longitudinal (X) de la traverse et
- étant fabriquée sous la forme d'une traverse massive avec un espace vide (12),
- qui s'étend entre ces éléments d'armature (11)
- qui s'étend à partir d'au moins un côté extérieur de traverse vers l'intérieur de la traverse,
- et la traverse (1) comprenant au moins deux systèmes enregistreurs de valeurs de mesure,
- un des systèmes enregistreurs de valeurs de mesure étant un système enregistreur de température avec un ensemble de capteurs à infrarouge, qui est inséré dans l'espace vide (12).

2. Traverse selon la revendication 1, qui est fabriquée comme une traverse en béton et dans laquelle, pendant la fabrication, les éléments d'armature (11) sont coulés sous précontrainte.

3. Traverse selon l'une des revendications précédentes, l'espace vide (12) s'étendant le long de l'axe longitudinal (X) de la traverse, plus particulièrement de manière coaxiale par rapport à la traverse avec des éléments d'armature (11) répartis globalement de manière uniforme autour de l'espace vide (12).

4. Traverse selon l'une des revendications précédentes, l'espace vide se présentant sous la forme d'une cloche.

5. Traverse selon l'une des revendications précédentes, la traverse étant munie de moyens de fixation (15, 21) pour la fixation en position codée des capteurs IR.

6. Traverse selon la revendication 5, les moyens de fixation (15, 21) étant amovibles de manière répétée pour le retrait des capteurs IR.

7. Traverse selon l'une des revendications précédentes, les capteurs infrarouges étant disposés de manière fixe à l'intérieur d'une unité d'enveloppe (20) qui est insérée dans l'espace vide (12).

8. Traverse selon la revendication précédente, moyennant quoi, sur le côté extérieur de la traverse, à partir duquel s'étend l'espace vide (12), est fixée, autour de l'espace vide (12), une plaque de base (13) avec des premiers moyens de fixation (15), qui sont accessibles, lorsque l'unité d'enveloppe est retirée de l'espace vide, à partir du côté extérieur de la traverse, et l'unité d'enveloppe (20) comprenant des deuxièmes moyens de fixation (21) conçus de manière complémentaire, les premiers et les deuxièmes moyens de fixation interagissant pour la fixation en position codée, amovible de manière répétée.

9. Traverse selon l'une des revendications précédentes, moyennant quoi, transversalement par rapport à l'axe longitudinal de la traverse et lorsque la traverse est intégrée à l'intérieur du tronçon de voie, s'étend un canal (14a, 14b) à partir de son côté supérieur jusqu'à l'espace vide.

10. Traverse selon la revendication 9, moyennant quoi, sur le côté supérieur de la traverse, à partir duquel s'étend le canal (14a, 14b), est fixé un dispositif de fermeture (30a, 30b) recouvrant le canal vers le côté extérieur, qui peut être ouverte avec une électronique de fermeture qui y est connectée.

11. Traverse selon l'une des revendications 9 ou 10, moyennant quoi, sur le côté supérieur de la traverse, à partir duquel s'étend le canal (14a, 14b), autour du canal (14a, 14b), est fixée une plaque de base (16) avec des troisièmes moyens de fixation, qui sont accessibles, au moins lorsque le dispositif de fermeture (30a, 30b) est retiré, à partir du côté supérieur de la traverse et le dispositif de fermeture (30a, 30b) comprenant des quatrièmes moyens de fixation (31) conçus de manière complémentaire, les troisièmes et les quatrièmes moyens de fixation interagissant pour la fixation en position codée amovible de manière répétée.

12. Traverse selon l'une des deux revendications précédentes, moyennant quoi, dans l'unité d'enveloppe, est disposé un système de miroirs, interagissant avec les capteurs IR, pour la déviation des rayons IR arrivant à travers le canal (14a, 14b), avec lequel le dispositif de fermeture (30a, 30b) est orienté.

13. Traverse selon l'une des revendications précédentes, un deuxième système enregistreur de valeur de mesure étant un système enregistreur de force avec une cellule dynamométrique (61), qui est logée au niveau d'un côté extérieur de la traverse et en dessous du rail (2).

14. Traverse selon la revendication 13, la cellule dynamométrique (61) comprenant des connexions électriques pour le prélèvement de signaux électriques, qui représentent la force appliquée par le rail sur la cellule dynamométrique.

15. Traverse selon la revendication 13 ou 14, la cellule dynamométrique (61) étant conçue pour l'enregistrement de forces verticales (Q) et de forces horizontales (Y).
